(19) **Europäisches Patentamt / European Patent Office / Office européen des brevets**

(11) **EP 3 539 840 A1**

(12) **EUROPEAN PATENT APPLICATION**

(43) Date of publication:
18.09.2019 Bulletin 2019/38

(51) Int Cl.:
*B60W 50/14* (2012.01)   *B60W 40/08* (2012.01)

(21) Application number: 19161220.9

(22) Date of filing: 07.03.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 12.03.2018 JP 2018044599

(71) Applicant: YAZAKI CORPORATION
Minato-ku,
Tokyo 108-8333 (JP)

(72) Inventors:
• SUZUKI, Yukio
Susono-shi, Shizuoka 410-1194 (JP)
• OTOMO, Kentaro
Susono-shi, Shizuoka 410-1194 (JP)

(74) Representative: Grünecker Patent- und
Rechtsanwälte
PartG mbB
Leopoldstraße 4
80802 München (DE)

(54) **ALERTNESS MAINTAINING DEVICE**

(57) An object of the present invention is to provide an alertness maintaining device that is useful for suppressing variation of an alertness of a driver and for maintaining the alertness at a comparatively high level. The alertness maintaining device includes a driver state monitoring section 31 that detects at least one of an actual alertness of a driver and predicted change of the alertness; a voice output section 38 that applies, to the driver, stimulus information necessary for maintaining the alertness; and an interaction control section 37 that changes an output content of the stimulus information output section in accordance with a level of the alertness of the driver based on an output of the driver state monitoring section. The strength of the stimulus is changed in accordance with the level of the alertness. When a simple running state is detected, a stimulus for maintaining the alertness is applied. The driver is specified, and an interaction scenario according with preference of the driver is selectively used to suppress unpleasant feeling of the driver.

FIG. 1

EP 3 539 840 A1

## Description

[Technical Field]

The present invention relates to an alertness maintaining device usable for comparatively highly maintaining alertness of a driver on a vehicle.

[Background Art]

Even in a vehicle equipped with an autonomous driving function for automatically controlling, for example, an accelerator operation, a brake operation and a steering operation necessary for driving the vehicle without involvement of a driver, it is assumed that the autonomous driving mode is switched to a manual driving mode requiring the involvement of the driver on the occurrence of, for example, a situation that cannot be coped with by a system. Specifically, authority of an actual driving operation and responsibility of the driving need to be devolved (handed over) from the autonomous driving system to a driver sitting on the driver's seat.

Accordingly, if there is a possibility of arising of the handover from the autonomous driving system to the driver, the driver needs to be always ready for driving the vehicle himself/herself even when the vehicle is running in the autonomous driving mode. If an alertness of the driver is at a low level, as in a case where he/she is dozing off, however, the handover from the autonomous driving system to the driver cannot be carried out. Therefore, in order to perform the handover smoothly, it is significant to maintain the alertness of the driver at a high level.

In a general vehicle not equipped with the autonomous driving function, a possibility of occurrence of a traffic accident increases if, for example, a driver dozes off during the driving. Accordingly, in order to guarantee safety of driving, it is very significant to maintain the alertness of the driver at a high level so that the driver does not doze off even for a short time.

For example, as an alertness managing device of Patent Literature 1, a technique to maintain and improve the alertness of a user safely, naturally and definitely without interfering with a driving operation of a vehicle or the like is described. Specifically, when lowering of the alertness is determined or predicted, an interaction start determination section is notified of information corresponding to the lowering of the alertness. The interaction start determination section determines, based on the information corresponding to the lowering of the alertness of the driver obtained from a driver state determination section, whether or not an interaction with the driver is to be started, and notifies an interaction control section of the start of the interaction.

[Prior Art Documents]

[Patent documents]

[Patent document 1] JP-A-2001-014599

[Summary of the Invention]

[Problems to be solved by the invention]

In using the technique of Patent Literature 1, however, the interaction with the driver is not started unless the alertness is lowered to some extent. Accordingly, variation of the alertness caused before starting the interaction with the driver is large, and hence the alertness cannot be stabilized at a high level.

Therefore, if a handover request from the autonomous driving system to the driver arises at a timing when, for example, the alertness of the driver is lowered, the driver is not ready for driving himself/herself and hence smooth handover cannot be carried out. Besides, also in the general vehicle not equipped with the autonomous driving function, the alertness of the driver may be temporarily lowered, and hence there may arise a situation where the safety of the driving cannot be sufficiently guaranteed.

The present invention was devised in consideration of the above-described circumstances, and an object is to provide an alertness maintaining device useful for suppressing variation of an alertness of a driver and maintaining the alertness at a comparatively high level.

[Means for solving the problems]

In order to achieve the above-described object, an alertness maintaining device of the present invention are characterized by the following (1) to (4):

> (1) An alertness maintaining device having a function for maintaining an alertness of a driver on a vehicle, including: a driver state monitoring section that detects at least one of an actual alertness of the driver and predicted change of the alertness; a stimulus information output section capable of applying, to the driver, stimulus information necessary for maintaining the alertness of the driver; and an interaction control section that changes an output content of the stimulus information output section in accordance with a level of the alertness of the driver based on an output of the driver state monitoring section.

According to the alertness maintaining device having the structure of (1) described above, the interaction control section changes the output content of the stimulus information output section so as to reflect the level of the alertness of the driver. Accordingly, even when the actual alertness of the driver is not largely lowered, or even when the predicted lowering of the alertness is small, interaction control can be started to apply a stimulus to the driver for preventing the alertness from lowering. Therefore, the alertness of the driver can be maintained at a comparatively high level, and a range of variation of the alertness is small. Besides, since the range of the variation of the alertness is small, for example, no matter which timing a handover request arises at, smooth handover can be realized because the alertness of the driver is high. Furthermore, also in a general vehicle not performing autonomous driving, since the range of the variation of the alertness of the driver is small, safety of driving can be easily guaranteed.

(2) The alertness maintaining device according to (1), in which the interaction control section reflects the level of the alertness of the driver detected by the driver state monitoring section in at least intensity of a stimulus of the information output by the interaction control section.

According to the alertness maintaining device having the structure of (2) described above, the strength of the stimulus of the information output from the interaction control section can be adjusted in accordance with the level of the alertness of the driver. For example, when the alertness of the driver is at a comparatively high level, the lowering of the alertness of the driver can be prevented by applying merely a comparatively weak stimulus, and besides, since a stimulus stronger than necessary is not applied during the autonomous driving, comfortableness of the autonomous driving can be retained. Furthermore, when the alertness of the driver is lowered to some extent or abrupt lowering is predicted, a comparatively strong stimulus is applied so that the alertness can be rapidly increased or the lowering of the alertness can be prevented beforehand.

(3) The alertness maintaining device according to (1) or (2), further including a driving state monitoring section that detects a simple running state of the vehicle, in which the interaction control section outputs a stimulus for inhibiting lowering of the alertness of the driver from the stimulus information output section when the driving state monitoring section detects the simple running state.

According to the alertness maintaining device having a structure of (3) described above, in an environment where the alertness of the driver is easily lowered, for example, in a case where a simple running state of the vehicle is continuing, a stimulus can be applied to the driver so that the lowering of the alertness can be inhibited.

(4) The alertness maintaining device according to any one of (1) to (3), further including a personal authentication section that specifies an individual corresponding to the driver; and a preference information acquisition section capable of acquiring preference information of a plurality of individuals, in which the interaction control section acquires preference information of the individual specified by the personal authentication section using the preference information acquisition section, and outputs a stimulus for inhibiting lowering of the alertness of the driver from the stimulus information output section based on the acquired preference information of the individual.

According to the alertness maintaining device having a structure of (4) described above, a stimulus in accordance with the preference of a specific driver actually driving the vehicle can be selectively applied. Accordingly, the lowering of the alertness can be effectively prevented. In addition, since the stimulus accords with the preference of the driver of the vehicle, the stimulus can be applied without making the driver feel unpleasant.

[Advantages of the invention]

According to an alertness maintaining device of the present invention, variation of an alertness of a driver can be suppressed, and the alertness can be maintained at a comparatively high level. Specifically, an interaction control section changes an output content of a stimulus information output section in such a manner as to reflect a level of the alertness of the driver. Accordingly, even when the actual alertness of the driver is not largely lowered, or even when merely small lowering of the alertness is predicted, interaction control can be started for applying a stimulus to the driver so as not to lower the alertness. Therefore, the alertness of the driver can be maintained at a comparatively high level, and a range of the variation of the alertness can be made small. Besides, since the range of the variation of the alertness is small, for example, no matter which timing a handover request arises at, the alertness of the driver is so high that smooth handover can be realized. Besides, also in a general vehicle not performing autonomous driving, since the range of the variation of the alertness of the driver is small, safety of the driving can be easily guaranteed.

The present invention has been briefly described so far. Besides, details of the present invention will be further clarified by reading the following embodiment for practicing the present invention (hereinafter simply referred to as the embodiment) with reference to the accompanying drawings.

[Brief Description of the Drawings]

Fig. 1 is a block diagram illustrating an exemplified structure of an alertness maintaining device.
Fig. 2 is a flowchart illustrating an exemplified operation of the alertness maintaining device.
Fig. 3 is a time chart illustrating an example 1 of change of an alertness occurring in using the alertness maintaining device.
Fig. 4 is a time chart illustrating an example 2 of the change of the alertness occurring in using the alertness maintaining device.
Fig. 5 is a time chart illustrating an example 3 of the change of the alertness occurring in using the alertness maintaining device.

Fig. 6 is a block diagram illustrating an exemplified structure of a main part of a vehicle system equipped with an autonomous driving function.

Fig. 7 is a flowchart illustrating an operation of the alertness maintaining device according to a modification.

Fig. 8A and Fig. 8B are time charts illustrating exemplified time-series changes occurring when the alertness is at different levels.

[Modes for Carrying Out the Invention]

A specific embodiment of the present invention will now be described with reference to the accompanying drawings.

<Exemplified Structure of Alertness Maintaining Device>

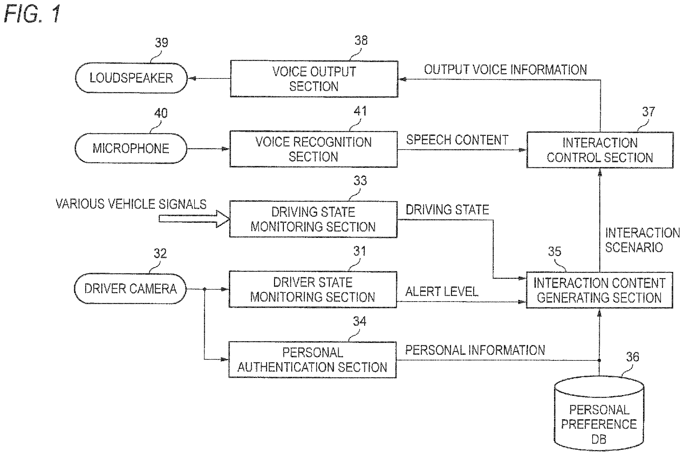

Fig. 1 illustrates an exemplified structure of an alertness maintaining device according to the embodiment of the present invention. The alertness maintaining device illustrated in Fig. 1 is mounted on a vehicle for use, and is used for maintaining an alertness of a driver at a comparatively high level.

There is a vehicle equipped with an autonomous driving function for causing a system to automatically perform a vehicle driving operation including an accelerator operation, a brake operation and a steering operation without involvement of a driver. Such a vehicle equipped with the autonomous driving function issues, however, on the occurrence of a situation that cannot be coped with by the system, a handover request for devolving a part of the driving operation or responsibility of the driving from the system to a driver.

In such a case, when the alertness of the driver is at a high level, the handover from the system to the driver can be smoothly carried out. On the other hand, when the alertness of the driver is at an extremely low level, the handover cannot be carried out. When the alertness maintaining device of Fig. 1 is used, the alertness of the driver can be maintained at a high level, and the handover can be smoothly carried out in response to the handover request issued. Needless to say, also in a general vehicle not equipped with the autonomous driving function, it is significant to maintain the alertness of a driver at a high level for guaranteeing safety of the driving operation performed by the driver, and the alertness maintaining device of Fig. 1 is worth using also in such a general vehicle.

The alertness maintaining device of Fig. 1 includes a driver state monitoring section 31, a driver camera 32, a driving state monitoring section 33, a personal authentication section 34, an interaction content generating section 35, a personal preference DB (database) 36, an interaction control section 37, a voice output section 38, a loudspeaker 39, a microphone 40, and a voice recognition section 41.

The driver camera 32 is installed in a portion on an instrument panel or the like in front of the driver's seat of the vehicle, and is positioned so that a range including the face of the driver sitting on the driver's seat can be shot.

The driver state monitoring section 31 always monitors a state of the face of the driver based on a result obtained by image processing of an image output by the driver camera 32, and grasps an alertness (alert level) of the driver. For example, based on at least one of the eye movement or the blink in the face of the driver, the actual alertness of the driver can be grasped, or change of the alertness can be predicted.

For example, the alertness Y can be calculated in accordance with the following expression by utilizing known technique:

$$Y = w1 \cdot L + w2 \cdot C + w3 \cdot B \quad \dots \quad (1)$$

w1, w2, w3: weighting factor
L: long blink rate
C: eye closure rate
B: blink rate

The long blink rate L corresponds to a rate of occurrence of long blinks in an eye closure time distribution of blinks. The eye closure rate C corresponds to a rate of eye closure time per unit time. The blink rate B corresponds to the number of blinks per unit time. As the weighting factors w1 to w3, values optimized based on data and the like resulting from an experiment are employed.

Specifically, an image shot by the driver camera 32 is subjected to the image processing by the driver state monitoring section 31 for monitoring the state of the region including the eyes and eyelids of the driver, and the open/close state of the eyelids and the change of the state are detected so that the parameters L, C and B necessary for the calculation of the alertness Y can be specified.

Alternatively, the alertness can be grasped based on information excluding that on the face. For example, information on blood flow (pulse wave) or brain wave of the driver can be used. Alternatively, when the driver is performing the driving operation of the vehicle, the change of the alertness can be grasped based on a cycle of erratic driving in the running state of the vehicle. For example, the erratic driving cycle becomes long when the alertness is lowered.

The driving state monitoring section 33 acquires information on a vehicle speed and steering based on various signals output by the vehicle for grasping a driving state such as a simple running state. A representative example of the simple running state can be a state where the gravity applied in a front-back direction or a left-right direction to the driver does not exceed a threshold value continuously for a prescribed period of time or longer time. This can be applied to both the autonomous driving and the manual driving.

The personal authentication section 34 recognizes a current driver as a specific individual based on the result of the image processing of the image of the driver's face shot by the driver camera 32. Then, it outputs personal information (such as the name and the ID of the driver) with which the driver can be specified.

The personal preference DB 36 precedently holds information on preferences of one or more individuals that can be a driver of the vehicle. Since the driver can be specified based on the personal information output by the personal authentication section 34, the preference information of the driver can be acquired from the personal preference DB 36. Besides, the personal preference DB 36 also holds information on an interaction scenario in relation to each of various preference information, an interaction scenario in accordance with each extent of the lowering of the alertness, an interaction scenario in association with a difference in the driving state and the like. Incidentally, the personal preference DB 36 may be provided in the vehicle, or may be disposed on a server outside the vehicle accessible through wireless communication.

The interaction content generating section 35 generates information on an appropriate interaction scenario using the information stored in the personal preference DB 36 based on the driving state of the vehicle output by the driving state monitoring section 33, the alert level of the driver output by the driver state monitoring section 31, and the personal information of the driver output by the personal authentication section 34.

The interaction control section 37 performs a control for performing an interaction between the alertness maintaining device and the driver based on an interaction scenario output by the interaction content generating section 35. Specifically, for presenting information to the driver, the interaction control section 37 outputs output voice information according with the corresponding interaction scenario. Besides, the interaction control section 37 receives, as a speech content, a voice response of the driver to the output of the output voice information, and combines the speech content with next interaction action.

The voice output section 38 generates a voice signal corresponding to the output voice information output by the interaction control section 37 and outputs the resultant to the loudspeaker 39. The loudspeaker 39 converts the voice signal input from the voice output section 38 into a sound heard as a voice by the driver.

The microphone 40 converts a sound corresponding to the speech content of the driver into a voice electric signal and outputs the resultant to the voice recognition section 41. The voice recognition section 41 processes the voice signal of the driver output from the microphone 40 to recognize the speech content. Information on the speech content recognized by the voice recognition section 41 is output to the interaction control section 37.

<Exemplified Operation of Alertness Maintaining Device>

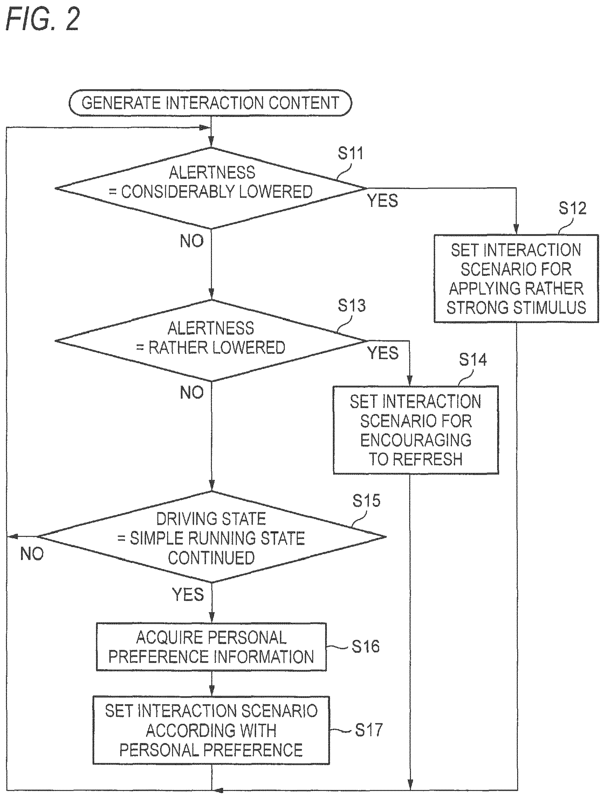

An exemplified operation of the alertness maintaining device of Fig. 1 is illustrated in Fig. 2. Specifically, the interaction content generating section 35 executes the operation of Fig. 2. The operation illustrated in Fig. 2 will now be described.

When the interaction content generating section 35 detects, based on the alert level output by the driver state monitoring section 31, that the alertness of the driver has been "considerably lowered" in step S11, the process proceeds to step S12. Then, an interaction scenario for applying a comparatively strong stimulus is acquired from the personal preference DB 36, and the acquired scenario is output to the interaction control section 37. Specifically, a scenario of outputting a compulsory voice message such as "It's dangerous! Please take a break immediately." is assumed.

Alternatively, when the interaction content generating section 35 detects, based on the alert level output by the driver state monitoring section 31, that the alertness of the driver has been "rather lowered" in step S13, the process proceeds to step S14. Then, an interaction scenario for encouraging the driver to refresh himself/herself (applying a comparatively weak stimulus) is acquired from the personal preference DB 36, and the acquired scenario is output to the interaction control section 37. Specifically, a scenario of outputting a voice message of a proposal for a stop such as "There is a good cafe ahead. Would you like to come by?" is assumed.

Besides, when the interaction content generating section 35 detects, based on the information on the driving state output by the driving state monitoring section 33, for example, that the vehicle has been in a simple running state for a prescribed period of time or longer time in step S15, the process proceeds to step S16. Then, the interaction content generating section 35 specifies the driver by acquiring the personal information of the driver from the personal authentication section 34, and acquires preference information of the specified driver from the personal preference DB 36. Besides, the interaction content generating section 35 acquires a proper interaction scenario according with the preference information from the personal preference DB 36 in step S17, and outputs the acquired scenario to the interaction control section 37. Specifically, an interaction scenario of a limited type regarding a topic attracting the driver is preferentially selected, and the selected scenario is output to the interaction control section 37.

Incidentally, a cycle for executing each of the steps S11, S13 and S15 of Fig. 2 may be individually adjusted. It is assumed, for example, that the execution cycle of step S11 is set to be rather short for coping with quick change of the alertness, and that the execution cycle of step S13 is set to be long in accordance with slow change of the alertness.

<Specific Example 1 of Alertness Change>

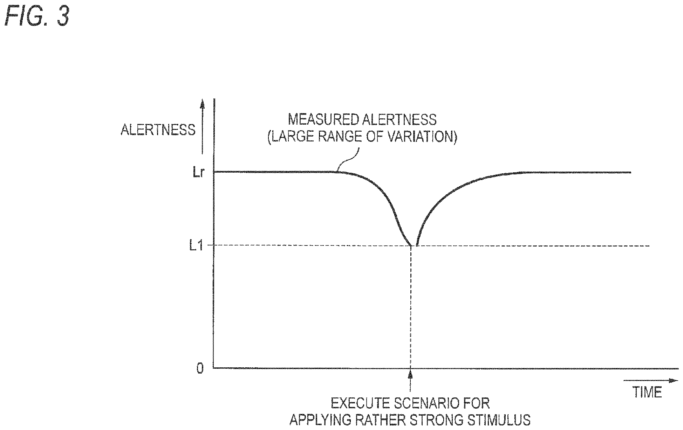

An example 1 of alertness change occurring in using the alertness maintaining device of Fig. 1 is illustrated in Fig. 3.

For example, when the driver suddenly feels drowsy, it is assumed that the alertness of the driver is rapidly lowered from a normal state (corresponding to an alertness reference value Lr) as illustrated in Fig. 3. In such a case, the interaction content generating section 35 compares, in step S11, the alert level output by the driver state monitoring section 31 with an alertness threshold value L1, and the processing of step S12 is executed at a timing when the alert level has lowered to the alertness threshold value L1.

Accordingly, based on the interaction scenario output by the interaction content generating section 35, the interaction between the alertness maintaining device and the driver is executed. As a result, a strong stimulus is applied to the driver in this case, and hence the alertness of the driver is rapidly increased to the normal state. Therefore, in the exemplified case illustrated in Fig. 3, the range of the variation of the alertness of the driver is comparatively large, but the alertness can be restored, in a short time, to an alertness at which a handover request of the autonomous driving vehicle can be coped with or to an alertness necessary for guaranteeing the safety in the manual driving.

<Specific Example 2 of Alertness Change>

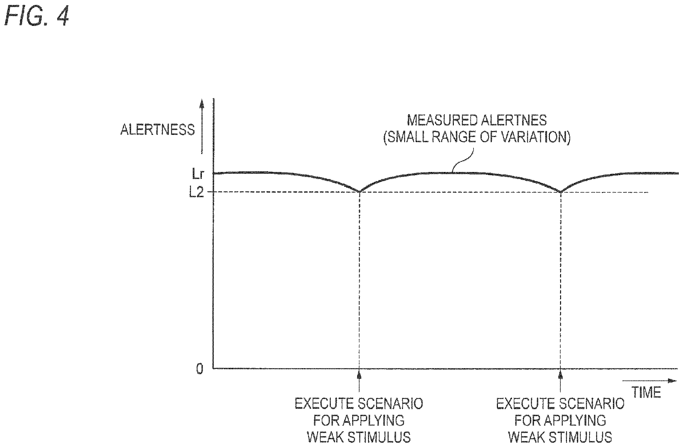

An example 2 of the alertness change occurring in using the alertness maintaining device of Fig. 1 is illustrated in Fig. 4.

For example, when a situation where a stimulus externally applied to the driver is small has been continued, it is assumed that the alertness of the driver tends to be gently (naturally) lowered. In such a case, every time the alertness of the driver is lowered to an alertness threshold value L2, an interaction for applying a weak stimulus is executed as illustrated in Fig. 4, and thus, the range of the variation of the alertness is suppressed and a state of high alertness (approximate to the usual alertness reference value Lr) can be retained.

Specifically, when the interaction content generating section 35 compares the alert level output by the driver state monitoring section 31 with the alertness threshold value L2 in step S13 of Fig. 2 (L2 > L1), the processing of step S14 is executed even when the alertness is slightly lowered, and hence, the lowering of the alertness and increase of the range of the variation of the alertness can be prevented. In this manner, the driver of the autonomous driving vehicle can always respond to the handover request. Alternatively, the alertness necessary for guaranteeing the safety in the manual driving can be always maintained.

<Specific Example 3 of Alertness Change>

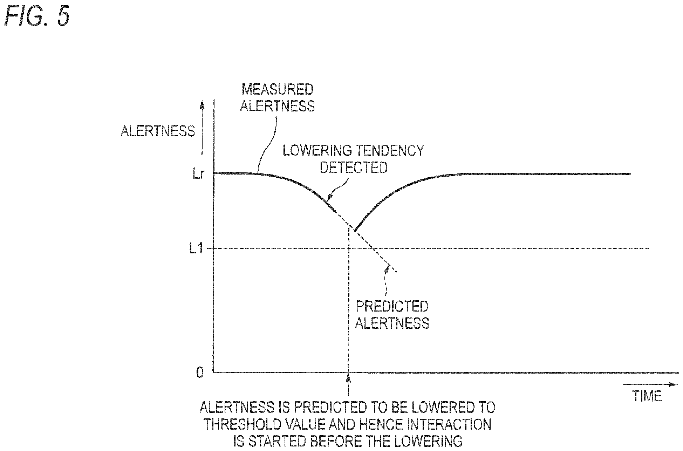

An example 3 of the alertness change occurring in using the alertness maintaining device of Fig. 1 is illustrated in Fig. 5.

In each of steps S11 and S13 of Fig. 2, the current alertness detected by the driver state monitoring section 31 may be compared with the alertness threshold value L1 or L2, or a predicted alertness may be compared with the alertness threshold value L1 or L2. For example, in the exemplified case illustrated in Fig. 5, at a time point when lowering tendency of the alertness is detected, it is predicted that there is a possibility that a predicted alertness may become lower than the alertness threshold value L1, and therefore, it is assumed that the processing of step S12 or S14 of Fig. 2 is started to execute before the actual alertness reaches the alertness threshold value L1. Thus, the range of the variation of the actual alertness can be made small.

Besides, in addition to the detection of the lowering tendency of the alertness illustrated in Fig. 5, an alertness predicted based on an event highly correlated with the alertness lowering may be monitored in steps S11 and S13. For example, when a specific wave appears or a specific wave is fluctuated in pulse waves of a human, it is predicted that the alertness is to be lowered. Accordingly, in a case where the pulse wave of a human is monitored by the driver state monitoring section 31, if fluctuation of a specific wave of the pulse wave is detected although the alertness has not started to be lowered, the interaction content generating section 35 predicts the alertness lowering in steps S11 and S13 to start the interaction.

<Exemplified Structure of Vehicle System equipped with Autonomous Driving Function>

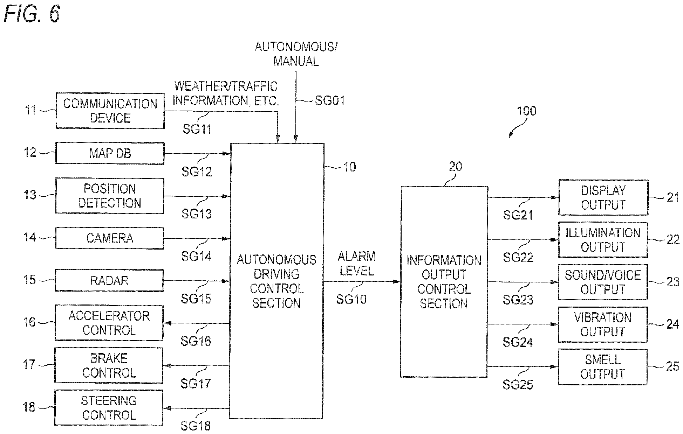

An exemplified structure of a main part of a vehicle system equipped with the autonomous driving function is illustrated in Fig. 6.

This vehicle system includes a function for autonomously driving a vehicle, and a vehicle information presentation device 100 for presenting information on the autonomous driving to a driver. Besides, the vehicle information presentation device 100 can include the alertness maintaining device illustrated in Fig. 1.

The vehicle system illustrated in Fig. 6 includes, as composing elements necessary for autonomously driving a vehicle, an autonomous driving control section 10, a wireless communication device 11, a road map database (DB) 12, a position detecting section 13, an onboard camera 14, a radar 15, an accelerator control section 16, a brake control section 17 and a steering control section 18.

The wireless communication device 11 is connected through wireless communication to a prescribed server installed outside the vehicle, so that weather information, traffic information and the like of places ahead in the traveling direction of the road where the vehicle is currently running can be acquired. The weather information, the traffic information and the like thus acquired by the wireless communication device 11 is input to the autonomous driving control section 10 as input information SG11.

The road map database (DB) 12 precedently stores and holds a road map of a wide area including the road where the vehicle is currently running and various information relating to the road. Information of the map and the like held in the road map database 12 is input to the autonomous driving control section 10 as input information SG12.

The position detecting section 13 can calculate latest position information corresponding to the current position of the vehicle by receiving and utilizing electrical waves of a satellite or the like of, for example, GPS (Global Positioning System). The position information is input to the autonomous driving control section 10 as input information SG13.

The onboard camera 14 can shoot images corresponding to situations around the vehicle in the front, back and side directions in the traveling direction to output image signals. The image signals are input to the autonomous driving control section 10 as input information SG14.

The radar 15 can detect, by a detecting function using an electrical wave such as a millimeter wave, presence of an obstacle such as a preceding vehicle, and a distance between the preceding vehicle and the own vehicle. Information detected by the radar 15 is input to the autonomous driving control section 10 as input information SG15.

The accelerator control section 16 includes an electrically controllable actuator necessary for automatically adjusting an accelerator position of the vehicle. In accordance with an output signal SG16 output by the autonomous driving control section 10, the accelerator control section 16 can adjust the accelerator position.

The brake control section 17 includes an electrically controllable actuator linked to a brake mechanism of the vehicle. In accordance with an output signal SG17 output by the autonomous driving control section 10, the brake control section 17 can control an on/off operation and braking force of the brake of the vehicle.

The steering control section 18 includes an electrically controllable actuator linked to a steering mechanism of the vehicle. In accordance with an output signal SG18 output by the autonomous driving control section 10, the steering control section 18 can activate the steering mechanism of the vehicle or generate an assisting torque for assisting the steering effort of the driver.

The autonomous driving control section 10 is an electronic control unit (ECU) for controlling the autonomous driving of a vehicle, and is equipped with a function corresponding to, for example, level 2 (LV2) or level 3 (LV3) of the autonomous driving levels defined by the Japanese government or National Highway Traffic Safety Administration (NHTSA).

In the level 2, the system automatically executes a plurality of operations out of the accelerator, steering and brake operations of the vehicle. In the level 2, however, the driver needs to always monitor a driving situation and execute the driving operation if necessary.

On the other hand, in the level 3, the system executes all the controls of the accelerator, steering and brake operations, and hence, the driver usually merely monitor the driving situation. Besides, it is usually not necessary for the driver to always monitor the situation. Even in this level 3, however, if the system issues a request in case of emergency or reaching a limit, the driver needs to respond to the request. Specifically, it is necessary to carry out the handover (H/O) of the driving responsibility from the system to the manual driving by the driver, and to shift the level 3 to a lower autonomous driving level of, for example, the level 2.

The autonomous driving control section 10 can perform the accelerator control of the vehicle by issuing an instruction to the accelerator control section 16 using the output signal SG16. Besides, the autonomous driving control section 10 can perform the brake control of the vehicle by issuing an instruction to the brake control section 17 using the output signal SG17. Furthermore, the autonomous driving control section 10 can perform the steering control of the vehicle by issuing an instruction to the steering control section 18 using the output signal SG18.

Besides, the autonomous driving section 10 grasps, by analyzing an image shot by the onboard camera 14, the position of each white line provided between traffic lanes and the position in the left-right direction of the vehicle, so as to calculate an appropriate position in the left-right direction of the vehicle or grasp a road situation ahead such as a curve. Accordingly, the autonomous driving control section 10 can realize a function for, for example, automatically controlling the vehicle to run in the center of the traffic lane on the road.

Besides, the autonomous driving control section 10 can automatically perform, based on the analysis result of an image shot by the onboard camera 14 or position or distance information of a preceding vehicle detected by the radar 15, acceleration and deceleration so that, for example, a distance between the preceding vehicle and the own vehicle can be retained within a safe range. Specifically, an ACC (Adaptive Cruse Control System) can be thus realized.

Furthermore, the autonomous driving control section 10 can calculate an appropriate running path on a road to be employed for the vehicle or predict change of the road situation ahead based on a precedently determined destination, the current position detected by the position detecting section 13, the road map held in the road map database 12, the traffic information acquired by the wireless communication device 11 and the like. In addition, if an analysis result of an actual image shot by the onboard camera 14 is reflected, prediction accuracy can be improved.

Besides, the autonomous driving control section 10 receives an autonomous/manual switching instruction SG01 generated by a switching operation or the like performed by the driver, so that the handover for switching from the level 3 to a lower autonomous driving level of, for example, the level 2 or the like can be carried out.

Furthermore, the autonomous driving control section 10 can detect a current dangerous situation based on the analysis result of an image shot by the onboard camera 14 or the distance information or the like detected by the radar 15. In addition, possible occurrence in the future of an event that may be dangerous can be predicted to some extent by using the weather information or the traffic information acquired by the wireless communication device 11.

For example, if there is a possibility of degradation in detection accuracy or temporary malfunction of various sensors provided on the vehicle due to influence of rainfall or the like, it may be dangerous to continue the autonomous driving of the level 3. Specifically, there is a possibility of the handover carried out to switch from the level 3 to the level 2. Besides, with respect to a situation of the weather including rainfall and the traffic, a possible situation that may occur in a place ahead can be precedently predicted based on not only the situation of the current place but also the information acquired by the wireless communication device 11.

Accordingly, when the occurrence of a possibly dangerous event such as rainfall in the place ahead is predicted, the autonomous driving control section 10 outputs an alarm level SG10 as a signal corresponding to the predicted event. Incidentally, the alarm level SG10 may include information on the type of the predicted event in some cases. The alarm level SG10 is input to an information output control section 20.

The information output control section 20 is an electronic control unit (ECU) for performing control for presenting information necessary in the autonomous driving to the driver. Incidentally, the autonomous driving control section 10 and the information output control section 20 of Fig. 6 may be integrated with each other.

The vehicle information presentation device 100 of the present embodiment includes a part of the functions of the autonomous driving control section 10, the information output control section 20, and at least one of a display output device 21, an illumination output device 22, a sound/voice output device 23, a vibration output device 24 and a smell output device 25.

Besides, when the information output control section 20 includes the various functions of the alertness maintaining device illustrated in Fig. 1, an interaction is performed between the system and the driver if necessary, and the alertness of the driver can be maintained at a high level. Accordingly, when a handover request from the level 3 to the level 2 arises, the handover can be smoothly carried out.

Incidentally, in the vehicle system of Fig. 6, the issue of the handover request from the level 3 to the level 2 is assumed, but also in a vehicle system of a general vehicle, it is very significant to equip the alertness maintaining device for guaranteeing the safety of the driving. In particular, when at least one of the brake operation, the accelerator operation and the steering operation performed in driving a vehicle is autonomously performed, a stimulus applied to a driver is smaller than in the manual driving, and hence the alertness of the driver tends to be easily lowered. Accordingly, when the alertness maintaining device is equipped to maintain the alertness of the driver at a high level, the safety of driving the vehicle can be improved.

On the other hand, when the vehicle is driving in an autonomous driving state, it is also significant to provide comfort to the driver. Accordingly, it is desired that the alertness maintaining device does not stimulate the driver more than necessary. Therefore, when it is detected that the driver is doing something, if the alertness of the driver is estimated to be high as in a case where, for example, the driver is listening to music or watching TV, the alertness maintaining device may be controlled to inhibit or suppress the interaction.

Incidentally, as the conditions for making determination in each of steps S11 and S13 of Fig. 2, a ratio of the alertness to the alertness reference value Lr may be compared with the threshold value, or a difference between the alertness reference value Lr and the alertness may be compared with the threshold value, or the absolute value of the alertness may be compared with the threshold value.

<Modification>

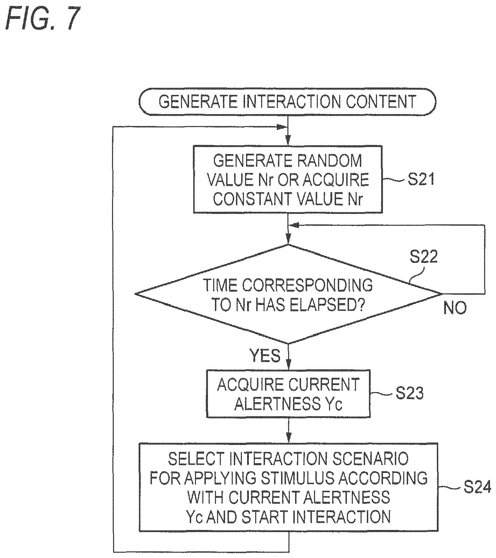

The operation of the alertness maintaining device according to a modification is illustrated in Fig. 7. Specifically, the interaction content generating section 35 of Fig. 1 executes the operation illustrated in Fig. 7. The operation of Fig. 7 will now be described.

The interaction content generating section 35 repeatedly executes the operation illustrated in Fig. 7. First, a random numerical value Nr falling in a range between a given upper limit and a given lower limit is generated in step S21. Alternatively, a precedently prepared constant value Nr is acquired. Then, the interaction content generating section 35 waits, in step S22, until a time period corresponding to the value Nr has elapsed.

When the time period corresponding to the value Nr has elapsed, the interaction content generating section 35 acquires a current alertness Yc in step S23. In other words, the latest information on the alert level output by the driver state monitoring section 31 is acquired.

The interaction content generating section 35 selects, in step S24, an interaction scenario for applying, to the driver, a stimulus according with the current alertness Yc, and instructs the interaction control section 37 to immediately start an interaction with the driver.

Specifically, when the alertness maintaining device executes the operation illustrated in Fig. 7, an interaction is repeatedly performed periodically at constant time intervals or random time intervals regardless of occurrence of any event. The content of the interaction performed at each timing is automatically changed in accordance with the level of the alertness Yc at that time point.

<Examples of Time-Series Change of Alertness>

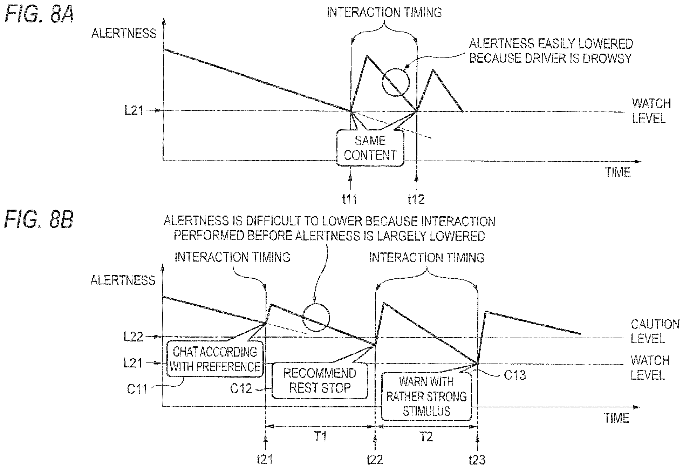

Examples of time-series changes occurring at different alertness are illustrated in Fig. 8A and Fig. 8B.

When the alertness maintaining device executes the operation illustrated in Fig. 2, an interaction is performed if it is detected that the alertness has been lowered. For example, when the actual alertness is lowered beyond a watch level L21 as at times t11 and t12 of Fig. 8A, an interaction C0 is performed. Besides, the content of the interaction C0 is the same at both the times t11 and t12.

In the example illustrated in Fig. 8A, however, since the interaction is started after the alertness is lowered beyond the watch level L21, the driver has already been drowsy, and therefore, even though the alertness is temporarily increased by the interaction started at the time t11, this state does not last long and the alertness is easily lowered again.

On the other hand, when the alertness maintaining device executes the operation illustrated in Fig. 7, an interaction is performed at constant time intervals or random intervals (T1, T2) regardless of the lowering of the actual alertness or regardless of the current alertness. Accordingly, the interaction is repeatedly performed at, for example, arbitrary times t21, t22 and t23 of Fig. 8B.

Besides, when the alertness maintaining device executes the operation illustrated in Fig. 7, the content of the interaction is changed in step S24 in accordance with the alertness at that time point. For example, at the time t21 of Fig. 8B, the alertness is higher than a caution level L22, and hence, an interaction for applying a comparatively small stimulus is selected to be executed. For example, as a content C11 of the interaction, a chat according with the preference of the driver is started.

Besides, at the time t22 of Fig. 8B, since the alertness is in the middle between the caution level L22 and the watch level L21, an interaction for applying an intermediate stimulus is selected to be executed. For example, as a content C12 of the interaction, an interaction for recommending a rest stop is started.

Furthermore, at the time t23 of Fig. 8B, the alertness is lowered to the watch level L21, and hence, an interaction for applying a strong stimulus is selected to be executed. For example, as a content C13 of the interaction, an interaction for warning with a rather strong stimulus is started.

In the example illustrated in Fig. 8B, the interaction performed, for example, at the time t21 is performed in a state where the alertness is not largely lowered, and therefore, an effect to maintain the alertness at a high level is high even if the stimulus is small, and the alertness is difficult to be lowered at the time t21 and after. Accordingly, re-lowering of the alertness beyond the watch level L21 is difficult to occur. Besides, since the interaction with a content according with the alertness at that time point is performed, the driver can easily accept the interaction.

<Advantages of Alertness Maintaining Device>

Since the alertness maintaining device illustrated in Fig. 1 performs the operation of Fig. 2, the interaction is performed in step S14 even when the lowering of the alertness is small. Therefore, the alertness can be maintained at a high level as illustrated in Fig. 4, and the increase of the range of the variation of the alertness can be suppressed. In addition, merely a comparatively weak stimulus is applied, it is possible to prevent the driver from feeling unpleasant.

Besides, since the alertness maintaining device illustrated in Fig. 1 performs the operation of Fig. 2, if the alertness is abruptly lowered as illustrated in Fig. 3, a comparatively strong stimulus is applied in step S12 so that the alertness can be restored in short time.

Furthermore, since the alertness maintaining device illustrated in Fig. 1 performs the operation of Fig. 2, the procedure of step S17 is executed in a situation where the alertness of the driver is easily lowered as in a simple running state, and thus, the alertness of the driver can be maintained at a high level. In addition, an interaction scenario suitable to the actual preference of the driver is used, the alertness can be maintained effectively without causing the driver to feel unpleasant.

Now, the characteristics of the alertness maintaining device according to the embodiment of the present invention are simply summarized in the following [1] to [4]:

[1] An alertness maintaining device having a function for maintaining an alertness of a driver on a vehicle, including:

a driver state monitoring section (a driver state monitoring section 31) that detects at least one of an actual alertness of the driver and predicted change of the alertness;
a stimulus information output section (a voice output section 38) capable of applying, to the driver, stimulus information necessary for maintaining the alertness of the driver; and
an interaction control section (an interaction content generating section 35, an interaction control section 37) that changes an output content of the stimulus information output section in accordance with a level of the alertness of the driver based on an output of the driver state monitoring section.

[2] The alertness maintaining device according to [1], in which the interaction control section reflects the level of the alertness of the driver detected by the driver state monitoring section in at least intensity of a stimulus of the information output by the interaction control section (S11 to S14).

[3] The alertness maintaining device according to [1] or [2], further including a driving state monitoring section (33) that detects a simple running state of the vehicle, in which the interaction control section outputs a stimulus for inhibiting lowering of the alertness of the driver from the stimulus information output section (S17) when the driving state monitoring section detects the simple running state (S15).

[4] The alertness maintaining device according to any one of [1] to [3], further including a personal authentication section (34) that specifies an individual corresponding to the driver; and a preference information acquisition section (a personal preference DB 36) capable of acquiring preference information of a plurality of individuals, in which the interaction control section acquires preference information of the individual specified by the personal authentication section using the preference information acquisition section, and outputs a stimulus for inhibiting lowering of the alertness of the driver from the stimulus information output section based on the acquired preference information of the individual (S16, S17).

[Description of symbols]

10 autonomous driving control section
11 wireless communication device
12 road map database
13 position detecting section
14 onboard camera
15 radar
16 accelerator control section
17 brake control section
18 steering control section
20 information output control section
21 display output device
22 illumination output device
23 sound/voice output device
24 vibration output device
25 smell output device
31 driver state monitoring section
32 driver camera

33 driving state monitoring section
34 personal authentication section
35 interaction content generating section
36 personal preference DB
37 interaction control section
38 voice output section
39 loudspeaker
40 microphone
41 voice recognition section
L1, L2 alertness threshold value
Lr alertness reference value
L21 watch level
L22 caution level

**Claims**

1. An alertness maintaining device having a function for maintaining an alertness of a driver on a vehicle, including:

   a driver state monitoring section that detects at least one of an actual alertness of the driver and predicted change of the alertness;
   a stimulus information output section capable of applying, to the driver, stimulus information necessary for maintaining the alertness of the driver; and
   an interaction control section that changes an output content of the stimulus information output section in accordance with a level of the alertness of the driver based on an output of the driver state monitoring section.

2. The alertness maintaining device according to claim 1, in which the interaction control section reflects the level of the alertness of the driver detected by the driver state monitoring section in at least intensity of a stimulus of the information output by the interaction control section.

3. The alertness maintaining device according to claim 1 or 2, further including a driving state monitoring section that detects a simple running state of the vehicle, in which
   the interaction control section outputs a stimulus for inhibiting lowering of the alertness of the driver from the stimulus information output section when the driving state monitoring section detects the simple running state.

4. The alertness maintaining device according to any one of claims 1 to 3, further including
   a personal authentication section that specifies an individual corresponding to the driver; and
   a preference information acquisition section capable of acquiring preference information of a plurality of individuals, in which

the interaction control section acquires preference information of the individual specified by the personal authentication section using the preference information acquisition section, and outputs a stimulus for inhibiting lowering of the alertness of the driver from the stimulus information output section based on the acquired preference information of the individual.

FIG. 1

LOUDSPEAKER 39 ← VOICE OUTPUT SECTION 38 ← OUTPUT VOICE INFORMATION

MICROPHONE 40 → VOICE RECOGNITION SECTION 41 → SPEECH CONTENT → INTERACTION CONTROL SECTION 37

VARIOUS VEHICLE SIGNALS → DRIVING STATE MONITORING SECTION 33 → DRIVING STATE

DRIVER CAMERA 32 → DRIVER STATE MONITORING SECTION 31 → ALERT LEVEL → INTERACTION CONTENT GENERATING SECTION 35

INTERACTION SCENARIO

PERSONAL AUTHENTICATION SECTION 34 → PERSONAL INFORMATION

PERSONAL PREFERENCE DB 36

FIG. 2

```
          ( GENERATE INTERACTION CONTENT )
                          │
                          │
                          ▼                          S11
          ╱─────────────────────────────╲
         ╱           ALERTNESS            ╲
        ╱      = CONSIDERABLY LOWERED      ╲ ──────────────────────┐
         ╲                                ╱    YES                 │
          ╲─────────────────────────────╱                         │
                      │ NO                                    S12  │
                      │                              ┌──────────────▼──────┐
                      │                              │  SET INTERACTION    │
                      ▼                              │  SCENARIO FOR       │
          ╱─────────────────────────────╲           │  APPLYING RATHER    │
         ╱           ALERTNESS            ╲  S13      │  STRONG STIMULUS    │
        ╱      = RATHER LOWERED            ╲ ─────┐   └─────────────────────┘
         ╲                                ╱   YES │
          ╲─────────────────────────────╱        │     S14
                      │ NO                        │   ┌────────────────────┐
                      │                           ▼   │  SET INTERACTION   │
                      │                               │  SCENARIO FOR      │
                      │                               │  ENCOURAGING       │
                      │                               │  TO REFRESH        │
                      │                               └────────────────────┘
                      ▼                          S15
          ╱─────────────────────────────╲
         ╱        DRIVING STATE           ╲
    ◄────╱   = SIMPLE RUNNING STATE        ╲
     NO   ╲        CONTINUED              ╱
          ╲─────────────────────────────╱
                      │ YES
                      ▼
          ┌───────────────────────────┐
          │   ACQUIRE PERSONAL        │  S16
          │ PREFERENCE INFORMATION    │
          └───────────────────────────┘
                      │
                      ▼
          ┌───────────────────────────┐
          │ SET INTERACTION SCENARIO  │  S17
          │   ACCORDING WITH          │
          │ PERSONAL PREFERENCE       │
          └───────────────────────────┘
                      │
                      ▼
```

FIG. 3

ALERTNESS

MEASURED ALERTNESS
(LARGE RANGE OF VARIATION)

Lr

L1

0

TIME

EXECUTE SCENARIO FOR
APPLYING RATHER STRONG STIMULUS

FIG. 4

FIG. 5

ALERTNESS

MEASURED ALERTNESS

LOWERING TENDENCY DETECTED

Lr

L1

PREDICTED ALERTNESS

0

TIME

ALERTNESS IS PREDICTED TO BE LOWERED TO
THRESHOLD VALUE AND HENCE INTERACTION
IS STARTED BEFORE THE LOWERING

FIG. 6

*FIG. 7*

```
      ( GENERATE INTERACTION CONTENT )
                      │
   ┌──────────────────┤
   │                  ▼
   │         ┌──────────────────┐
   │         │  GENERATE RANDOM │
   │         │ VALUE Nr OR ACQUIRE ├── S21
   │         │  CONSTANT VALUE Nr │
   │         └──────────────────┘
   │                  │
   │                  ▼
   │                                          S22
   │            ◇ TIME CORRESPONDING ◇──────────┐
   │              TO Nr HAS ELAPSED?      NO     │
   │                  │                          │
   │                 YES│                        │
   │         ┌──────────────────┐                │
   │         │ ACQUIRE CURRENT  ├── S23          │
   │         │   ALERTNESS Yc   │                │
   │         └──────────────────┘                │
   │                  │                          │
   │                  ▼                          │
   │     ┌──────────────────────────┐           │
   │     │ SELECT INTERACTION SCENARIO│          │
   │     │ FOR APPLYING STIMULUS ACCORDING ├── S24
   │     │   WITH CURRENT ALERTNESS  │          │
   │     │  Yc AND START INTERACTION │          │
   │     └──────────────────────────┘           │
   │                  │                          │
   └──────────────────┘                          │
```

FIG. 8A

INTERACTION TIMING

ALERTNESS

ALERTNESS EASILY LOWERED
BECAUSE DRIVER IS DROWSY

L21

WATCH
LEVEL

SAME
CONTENT

TIME

t11    t12

FIG. 8B

ALERTNESS IS DIFFICULT TO LOWER BECAUSE INTERACTION
PERFORMED BEFORE ALERTNESS IS LARGELY LOWERED

INTERACTION TIMING

INTERACTION TIMING

ALERTNESS

L22

CAUTION
LEVEL

L21

CHAT ACCORDING
WITH PREFERENCE

WATCH
LEVEL

C11

C12

RECOMMEND
REST STOP

WARN WITH
RATHER STRONG
STIMULUS

C13

TIME

T1    T2

t21    t22    t23

Europäisches
Patentamt

European
Patent Office

Office européen
des brevets

# EUROPEAN SEARCH REPORT

Application Number

EP 19 16 1220

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/105694 A1 (PIONEER CORP [JP]; YASUSHI MITSUO [JP]; YANAGIDAIRA MASATOSHI [JP]) 20 September 2007 (2007-09-20) * paragraphs [0018] - [0020], [0029] - [0031]; claims 14,15; figure 3 * | 1-4 | INV. B60W50/14 B60W40/08 |
| X | FR 3 041 916 A1 (PEUGEOT CITROEN AUTOMOBILES SA [FR]) 7 April 2017 (2017-04-07) * page 3, line 21 - page 4, line 2 * * page 4, line 21 - line 26 * * page 8, line 33 - page 9, line 12 * | 1,3 | |
| X | EP 3 002 740 A1 (VOLVO CAR CORP [SE]) 6 April 2016 (2016-04-06) * paragraphs [0010], [0036], [0037], [0070] * | 1-3 | |
| X | EP 3 059 134 A1 (TOYOTA MOTOR CO LTD [JP]) 24 August 2016 (2016-08-24) * paragraphs [0028] - [0034], [0069], [0073]; claim 1; figure 9 * | 1,2 | |

TECHNICAL FIELDS SEARCHED (IPC)

B60W

The present search report has been drawn up for all claims

| Place of search | Date of completion of the search | Examiner |
|---|---|---|
| Munich | 30 July 2019 | Rameau, Pascal |

EPO FORM 1503 03.82 (P04C01)

## ANNEX TO THE EUROPEAN SEARCH REPORT
## ON EUROPEAN PATENT APPLICATION NO.

EP 19 16 1220

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2019

| Patent document cited in search report | | Publication date | Patent family member(s) | | Publication date |
|---|---|---|---|---|---|
| WO 2007105694 | A1 | 20-09-2007 | NONE | | |
| FR 3041916 | A1 | 07-04-2017 | NONE | | |
| EP 3002740 | A1 | 06-04-2016 | EP | 3002740 A1 | 06-04-2016 |
| | | | US | 2016096529 A1 | 07-04-2016 |
| EP 3059134 | A1 | 24-08-2016 | CN | 105911901 A | 31-08-2016 |
| | | | EP | 3059134 A1 | 24-08-2016 |
| | | | JP | 6191633 B2 | 06-09-2017 |
| | | | JP | 2016153960 A | 25-08-2016 |
| | | | US | 2016246298 A1 | 25-08-2016 |
| | | | US | 2017308083 A1 | 26-10-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001014599 A